# EUROPEAN PATENT APPLICATION

(11) **EP 1 698 230 A2**
(43) Date of publication of application: **06.09.2006**
(21) Application number: 06110522.7
(22) Date of filing: 28.02.2006
(51) Int. Cl.: A23C 20/00, A23C 19/08, A23C 19/093, A23C 19/09

(54) **Processed Cheese Made With Soy**

(30) Priority: 02.03.2005 US 70115
(71) Applicant: KRAFT FOODS HOLDINGS, INC., Northfield, Illinois 60093 (US)
(72) Inventor: Chen, Wen-Sherng, Glenview, IL 60025 (US); Akashe, Ahmad, Mundelein, IL 60060 (US); Gao, Song, Edison, NJ 08820 (US); Cudia, Ariel, Chicago, IL 60618 (US); Cole, Sheryl, Glenview, IL 60025 (US)
(74) Representative: Smaggasgale, Gillian Helen

(57) **Abstract**

A method for preparing processed cheese containing significant levels of soy protein which possesses melt, firmness, and flavor characteristics similar to regular processed cheese is provided. The method provides a mixture including a dry particulate soy protein ingredient containing soy protein having a molecular weight of about 4,000 to about 40,000 Daltons in combination with dairy fat and dairy protein without pre-emulsification of the soy material, and the mixture is cooked and a soy cheese product thereof is then packaged. This method provides a processed cheese product having the requisite textural and flavor properties, while avoiding competitive adsorption problems between dairy and soy protein ingredients and opportunities for microbial growth which can occur with aqueous emulsified soy compositions.

## Description

### FIELD OF THE INVENTION

The present invention relates generally to a method of preparing a nutritionally modified processed cheese product. More particularly, the present invention relates to a processed cheese product enriched with high levels of soy protein which possesses melt, firmness, and flavor characteristics similar to regular processed cheese (i.e., processed cheese without added soy protein).

### BACKGROUND OF THE INVENTION

Processed cheese, widely available in sliced and loaf forms, has become one of the most popular selling cheese products. Processed cheese products are particularly popular with children. Therefore, opportunities to increase the nutritional values and/or health benefits of processed cheese products without significantly impacting the organoleptic properties of the resulting product would be highly desirable.

Process cheese is conventionally prepared by grinding, and/or mixing while heating, one or more varieties of milk fat-containing natural cheeses, such as, for example, cheddar cheese, Colby cheese, Swiss cheese, brick cheese, Muenster cheese, pasta filata cheese, washed curd, and granular curd cheese. The resulting cheese is then blended with other dairy products, such as non-fat dry milk and whey solids, and emulsifying salts, such as disodium phosphate, at temperatures which are sufficiently elevated to pasteurize the cheese, to produce a homogeneous, pumpable, fluid cheese material that may be formed into sheets, slices, or other desired forms.

There are three general types of process cheese: pasteurized process cheese, pasteurized process cheese food, and pasteurized process cheese spread. These process cheeses have certain characteristics that are desirable to cheese consumers, including a smooth, creamy texture and a slight firmness that is attributable to the presence of at least 20 percent fat. Based on U.S. Standards of Identity, the main differences between the three types of process cheese are their moisture and fat content, and the use of optional ingredients in their manufacture. These cheeses typically are made in large quantities using a horizontal cooker (sometimes called a laydown cooker). Often, the process cheese is then automatically packaged in airtight cartons.

The health benefits of soybeans have been known for some time. For centuries, soybeans have been the primary source of protein in Asian countries, and in recent years the popularity of soy-based products has increased in the United States. Along with a tendency to lower cholesterol levels, soybeans have recently been linked with, or suggested as having a possible role in, inhibiting cancerous or tumor cells. Additionally, soy protein contains an amino acid profile that is among the most complete of all vegetable protein sources, and resembles, with the exception of the sulfur-containing amino acids, the pattern derived from high-quality animal protein sources. Thus, efforts have been made to incorporate soy into a wide variety of foods.

It would therefore be desirable to provide a process cheese type product containing, significant levels of soy protein while maintaining the flavor, texture and melt characteristics of processed cheese. In particular, it would be desirable to provide a soy cheese product which closely mimics the flavor and textural attributes of typical dairy-based processed cheese products. The present invention provides organoleptically pleasing processed cheese products having significant levels of soy protein.

### SUMMARY OF THE INVENTION

The present invention provides a method to produce a processed cheese product containing significant levels of soy protein which resembles conventional soy-free dairy-based process cheese. In one aspect, the method of the present invention comprises blending a hydrolyzed soy protein particulate ingredient containing soy protein having a molecular weight of about 4,000 to about 40,000 Daltons, dairy ingredients, emulsifying salts, and water forming a mixture free of an aqueous emulsion of the soy protein, and the mixture is cooked sufficiently to form a homogeneous, pumpable, fluid cheese material that may be formed into sheets, slices, or other desired forms.

The method of the present invention provides a processed soy cheese product having textural and flavor properties comparable to conventional, non-soy-containing process cheese, while avoiding shortcomings associated with the use in soy cheeses of other forms of soy protein such as aqueous emulsions, soy oil, or soymilk forms of soy protein materials. For instance, the use in the method of the present invention of dry particulate soy protein ingredient without pre-emulsifying it avoids a number of problems associated with aqueous emulsion forms of soy protein in soy cheese manufacture. These avoided problems include competitive adsorption between dairy and soy protein ingredients, and microbial growth, in aqueous emulsions. The dry particulate form of the soy protein ingredient also provides superior results than soy oils or soymilks. Soybean oil has a lower melting point than dairy fat unless subjected to hydrogenation which will generate undesirable trans fats. Non-hydrogenation soybean oil remains liquefied at ambient temperature and/or mostly liquefied at the refrigeration temperature; non-hydrogenated soybean oil-based process cheese, therefore generally have poor texture and mouthfeel. Soybean milk, whether in aqueous or dehydrated powder form, is lower in protein content and its protein is not hydrolyzed, which results in soy cheese products having undesirable texture (e.g., it is too firm, gritty, and too viscous for hot pack), and off-flavors (e.g., it imparts a slight soy flour-like off-flavor).

The molecular weight of the soy protein ingredient used in the method of the present invention is important to providing soy cheese products having desirable texture and flavor. In one aspect, the soy protein ingredient contains soy protein having a molecular weight in the range of about 4,000 to about 40,000 Daltons, particularly about 5,000 to about 35,000 Daltons, and more particularly about 5,500 to about 30,000 Daltons. The use of soy protein having larger molecular weights gives mealy or gritty textured products, while the use of soy protein having smaller molecular weights gives a mushy and watery-textured product. The soy protein is preferably used in hydrolyzed form in order to obtain satisfactory texture and flavor in the cheese product.

In one preferred aspect, the soy protein ingredient is predominantly comprised of soy protein. It may have a soy protein content of greater than about 70 percent, particularly greater than 80 percent, and more particularly greater than 90 percent. By using higher concentration soy protein ingredients, smaller amounts are needed to obtain the same amount of soy protein nutritional value per serving in the product, yet product flavor and texture are maintained at the higher soy levels when the soy cheese has been manufactured by an embodiment hereof.

In one aspect, the dairy ingredients comprise dairy protein and dairy fat components are introduced from a common source, such as regular soy-free process cheese made in a conventional manner. Alternatively, the dairy ingredients are individually added, such as dairy protein introduced as whey and/or milk protein concentrate or other dairy protein source, and the dairy fat content is introduced as natural cheese (which also imparts cheese flavor) together with a different source of milk fat. In an alternate aspect, a mixture of dairy protein and water is homogenized to form a wet mix, and the wet mix is blended with the hydrolyzed soy protein particulate ingredient having a molecular weight of about 4,000 to about 40,000 Daltons, natural cheese, milk fat, emulsifying salts and water to provide a mixture without forming an aqueous emulsion of soy material, and the resulting mixture is cooked sufficiently to form a homogeneous, pumpable, fluid cheese material that may be formed into sheets, slices, or other desired forms.

The soy cheese formulation ingredients can be proportioned in the practice of aspects of the present invention to provide overall protein, carbohydrate, fat, and moisture contents approximating that of conventional soy-free process cheese products, while maintaining comparable texture and flavor therewith. In one aspect, the soy cheese product contains about 14 to about 26 percent total protein (i.e., soy protein and dairy protein), about 4 to about 10 percent carbohydrates, about 12 to about 17 percent fat, and about 48 to about 60 percent moisture. Generally, the amount of soy protein is about 5 to about 25 percent, preferably about 7 to about 22 percent, and most preferably about 7 to about 12 percent of the finished cheese product.

In another aspect, the hydrolyzed soy protein particulate ingredient having the above-indicated molecular weight is blended with the other above-indicated ingredients, as applicable, to provide a cheese mix which is cooked to a homogenous mass, and then packaged, wherein all the hydrolyzed soy protein-containing compositions used and processed during the cheese making process have a water activity less than 0.8, particularly less than 0.6, and more particularly less than 0.5. The restriction of water activity to these ranges in all the soy protein-containing compositions handled and used during the cheese manufacturing process reduces or even eliminates opportunities for undesirable microbial growth to occur in the food materials.

Optional ingredients such as flavors, spices, or other foods may also be added to the cheese mixture, to provide a flavored process cheese or process cheese combined with other foods. Process cheese products containing between about 5 to about 25, particularly about 7 to about 22, and more particularly about 7 to about 12, percent soy protein while maintaining the desired organoleptic properties of process cheese may be produced by the process of the present invention.

### BRIEF DESCRIPTION OF THE DRAWINGS

FIG. 1 is a flowchart illustrating one embodiment of the present invention.
FIG. 2 is a flowchart illustrating another embodiment of the present invention.
FIG. 3 is a flowchart illustrating yet another embodiment of the present invention.

### DETAILED DESCRIPTION

The present invention provides a method of producing processed cheese with significant levels of soy protein. The soy-containing processed cheese product is made by: (1) blending a hydrolyzed soy protein particulate ingredient containing soy protein having a molecular weight of about 4,000 to about 40,000 Daltons, dairy ingredients, emulsifying salts, and water to form a non-emulsified mixture of the soy protein; and (2) cooking the non-emulsified mixture to form a homogeneous, pumpable, fluid cheese material that may be formed into sheets, slices, or other desired forms. The soy-containing process cheese product may be packaged in any convenient manner (e.g., hot packed). The dairy ingredients comprise dairy protein and dairy fat which can be introduced via a single ingredient, such as reworked regular soy-free process cheese made in a conventional manner. Alternatively, the dairy ingredients can be individually added to the mixture to be cooked, such as by separately adding (a) a dairy protein source, such as milk protein concentrate and/or whey protein, and (b) a dairy fat, such as in the form of natural cheese in combination with a supplemental milk fat source, such as cream or butterfat.

In an alternate aspect of the method of the current invention, a soy containing processed cheese product is made by: (1) homogenizing a mixture of dairy protein and water to form an aqueous mixture; (2) blending the aqueous mixture with a hydrolyzed soy protein particulate ingredient containing soy protein having a molecular weight of about 4,000 to about 40,000 Daltons, natural cheese, milk fat, emulsifying salts, and water to provide a non-emulsified mixture; and (3) cooking the non-emulsified mixture to form a homogeneous, pumpable, fluid cheese that may be formed into sheets, slices, or other desired forms.

Experimental results, such as described in the examples below, show that the use of soy protein having the indicated molecular weight in dry particulate form provide soy cheese products having acceptable texture and flavor properties. For purposes of this invention, "dry particulate form" is intended to mean a non-emulsified form such as a dry powder, slurry, solution, or the like; preferably it is a dry powder form containing less than about 7 percent moisture (more preferably about 4 to about 7 percent moisture). Dairy proteins in the dairy mix are added before soy protein powder into the cheese blend. Although not wishing to be limited by theory, it appears that the fat is emulsified by the dairy proteins and, thus, the soy protein was not absorbed to the oil/water interface but rather remained in the continuous (aqueous) phase even in the cooker. As long as the dairy proteins are added before soy protein in the cheese blend, the fat will not be emulsified by soy protein but rather by the dairy proteins.

The method of the present invention avoids competitive adsorption between dairy and soy proteins at the oil-water interface encountered in aqueous emulsions of soy protein, and reduces or prevents undesirable microbial growth which can occur in aqueous soy emulsions during hold times before cooking. Also, experimental results, such as those described herein, show that the use of oil or soymilk liquid forms of soy protein having the indicated molecular weight do not provide soy cheese products having acceptable texture and flavor properties. Soybean oil has a lower melting point than dairy fat which makes it difficult from a processing standpoint to homogenize the cheese formulation in the cooker. Soybean milk, whether in aqueous or dehydrated powder form, is lower in protein content and its protein is not hydrolyzed, which results in soy cheese products having undesirable texture (e.g., it is too firm, gritty, and too viscous for hot pack), and off-flavors (e.g., it imparts a slight soy flour-like off-flavor).

The soy protein is in hydrolyzed form in order to obtain satisfactory texture and flavor in the soy cheese product. For purposes herein, the term "hydrolyzed" means that the soy proteins have been cleaved into smaller polypeptides via enzymatic treatment. Soy proteins are associative polymers. Their molecular weight depends on the aggregated, associative structure formed by the protein, which in turn depends on the dissociating nature of the system into which it is dissolved. The molecular weight of associated forms of soy protein in a typical solution or formulation is about 150,000 to 300,000 Daltons. The commercially available soy protein ingredient used in the examples appears to have been pretreated by a hydrolysis process controlled to produce hydrolyzed proteins having a molecular weight distribution ranging from about 4,000 to about 40,000 Daltons, particularly about 5,000 to about 35,000 Daltons, and more particularly about 5,500 to about 30,000 Daltons. Experiments described in the examples below, for example, show that the use of soy protein having larger molecular weights gives mealy or gritty textured products, while the use of soy protein having smaller molecular weights gives a mushy and watery-textured product.

In another aspect, the hydrolyzed soy protein ingredient having the above-indicated molecular weight is blended with the other above-indicated ingredients, as applicable, to provide a cheese mix which is cooked to a homogenous mass, and then packaged, wherein all the hydrolyzed soy protein-containing compositions used and processed during the cheese making process have a water activity less than 0.8, particularly less than 0.6, and more particularly less than 0.5. The restriction of water activity to these ranges in all the soy protein-containing compositions handled and used during the cheese manufacturing process reduces or even eliminates opportunities for undesirable microbial growth to occur in the food materials.

The soy-containing processed cheese may optionally contain conventional process cheese additive ingredients, for example, food-grade acidulants and binding agents such as starches or gums. Also, other optional ingredients such as flavors, spices, or other foods may also be added to the cheese mixture, to provide a flavored process cheese or process cheese combined with other foods.

The soy cheese formulation ingredients can be proportioned in the practice of aspects of the present invention to provide overall protein, carbohydrate, fat, and moisture contents approximating that of conventional soy-free process cheese products, while maintaining comparable texture and flavor therewith. In one aspect, the soy cheese product contains about 14 to about 26 percent total protein, about 4 to about 10 percent carbohydrates, about 12 to about 17 percent fat, and about 48 to about 60 percent moisture. Generally, the amount of soy protein is about 5 to about 25 percent, preferably about 7 to about 22 percent, and most preferably about 7 to about 12 percent of the finished cheese product. Preferably the cheese formulation ingredients are introduced in respective amounts in the methods illustrated herein to provide a soy-containing cheese product with this nutritional make up. Especially preferred process cheese products containing between about 7 to about 12 percent soy protein while maintaining the desired organoleptic properties of process cheese may be produced by the methods of the present invention.

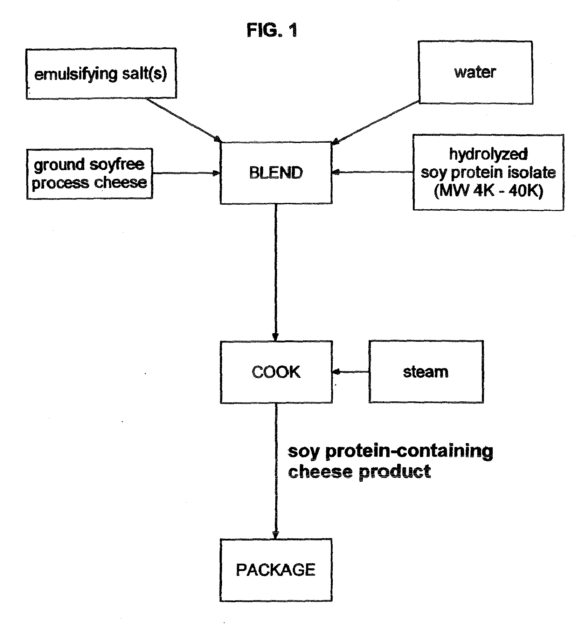

One preferred embodiment, depicted in FIG. 1, starts with a mixture of hydrolyzed soy protein having a molecular weight of about 4,000 to about 40,000 Daltons, regular soy-free process cheese as a source of dairy protein and dairy fat, water, and emulsifying agents. This mixture is blended in a blender, preferably a ribbon blender. The ingredients can be added to the blender in any convenient sequence or simultaneously. The water is added in an amount calculated to provide the desired moisture content in the soy cheese product, typically about 48 to about 60 percent. The water is not added in an amount for this purpose which will pre-emulsify the soy protein content in the soy/dairy ingredient mixture prior to cooking. The mixture is then transferred to a cooker where it is heated to about 165 to about 185°F for about 3 to about 15 minutes in the presence of the emulsifying salts to form a homogeneous mass. The product is then packaged (e.g., slice, sheet, loaf, or spread form).

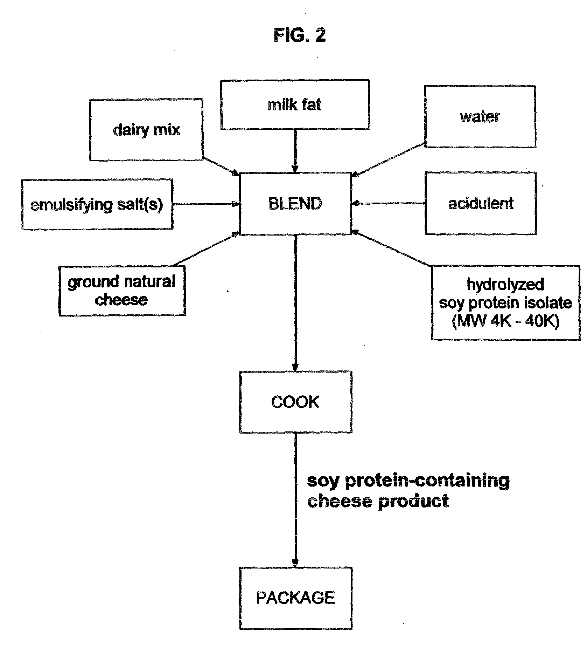

A second embodiment of the present invention is depicted in FIG. 2. In the method of FIG. 2, the dairy ingredients are added separately to the soy protein/dairy ingredient mixture. For instance, dairy protein is added as a milk protein source, such as milk protein concentrate and/or whey protein. As indicated in FIG. 2, the protein source can be a dairy mix comprised of a combination of whey protein and a milk protein concentrate. Dairy fat is introduced as natural cheese and in combination with a supplemental milk fat source, such as dairy cream and/or anhydrous milk fat. The hydrolyzed soy protein ingredient having a molecular weight of about 4,000 to about 40,000 Daltons, natural cheese, dairy ingredients, water, and emulsifying salts are blended with natural cheese in a blender, preferably a ribbon blender. Edible acids can be added to adjust the pH of the mixture. Flavors, colorants, and similar ingredients also may be added. This mixture is transferred to a cooker, where it is heated to about 165 to about 180°F, in the presence of the emulsifying salts to form a homogeneous mass. The product is then packaged in suitable or desired forms (e.g., slice or spread forms).

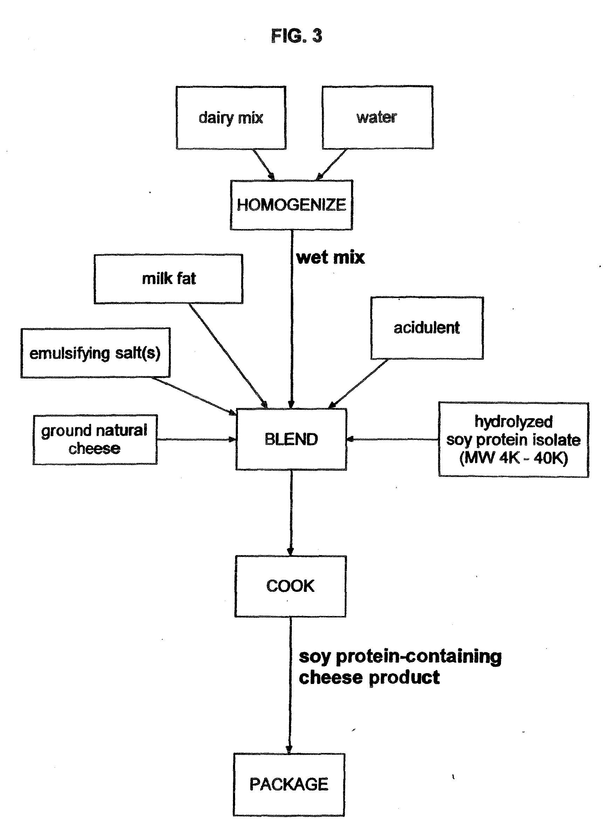

A third embodiment of the present invention is depicted in FIG. 3. In the method of FIG. 3, a mixture of dairy mix comprising dairy protein and water is homogenized, such as in a Tekmar homogenizer operated at about 72°F at medium speed setting for 2 minutes. The dairy mix can comprise a combination of whey and milk protein concentrate, such as described above. The resulting wet mix is blended with the hydrolyzed soy protein particulate ingredient having a molecular weight of about 4,000 to about 40,000 Daltons, natural cheese, milk fat, emulsifying salts and water to provide a mixture without forming an aqueous emulsion of soy material, such as in a ribbon blender. Edible acids may be added to adjust the pH. This mixture is transferred to a cooker, where it is heated to about 165 to about 180°F, in the presence of the emulsifying salts to form a homogeneous mass. The product is then packaged in suitable or desire forms (e.g., slice, sheet, loaf, or spread form).

As indicated, the hydrolyzed soy protein ingredient use in the method of the present invention has a molecular weight distribution ranging from about 4,000 to about 40,000 Daltons. The soy protein ingredient employed in the process of the invention is generally present in an amount effective to provide soy protein at about 5 to about 25 percent of the total weight of the cheese product or process cheese base being produced, and preferably at about 7 to about 12 percent. The soy protein ingredients used to practice the invention include conventional and commercially available dry particulate forms of soy concentrates and isolates meeting this molecular weight distribution. Especially preferred soy isolates contain about 84 to about 90 percent protein, about 1 to about 3 percent fat, about 0.1 to about 4 percent carbohydrate, and about 0.1 to about 0.3 percent dietary fiber. Especially preferred soy concentrates contain about 60 to about 75 percent protein, 0 to about 2 percent fat, about 20 to about 26 percent carbohydrate, and about 18 to about 26 percent dietary fiber. Suitable soy concentrates and soy isolates are available commercially from, for example, Solae Company (St. Louis, Mo.) and Archer-Daniel-Midland Co. (Decatur, III.).

The hydrolysis treatment used on the soy protein source may comprise, for example, a process of treating an aqueous soy material using ultrafiltration followed by an enzymatic treatment. For example, the hydrolysis method for preparing hydrolyzed soy proteins can comprise (1) heating a basic aqueous mixture of a soy material containing soy proteins, such as crude soy material (e.g., defatted soy flour or oil-extracted soy meal), to a temperature of about 110 to about 140°F, wherein the basic aqueous mixture has a pH of about 7 to about 11; (2) removing insoluble materials from the basic aqueous mixture; (3) passing the basic aqueous mixture through an ultrafiltration membrane having a molecular weight cutoff in the range of about 1,000 to about 50,000 Daltons while maintaining the pH at about 7 to about 12, thereby removing soluble carbohydrates and low molecular weight material; (4) adjusting the pH of the basic aqueous mixture to about 6 to about 8; (5) the soy proteins by treating the pH-adjusted aqueous mixture with a fungal protease enzyme or enzymes (e.g., a mixture of enzymes having endoprotease and exopeptidase activities) at about 75 to about 140°F for a time sufficient to form the highly functional soy proteins; (6) inactivating the enzyme at about 160 to about 200°F; and (7) recovering the highly functional soy proteins. Other soy hydrolysis treatments also may be used, such as the methods described in U.S. Pat. No. 6,455,081, which teachings are incorporated herein by reference.

A wide variety of dairy protein ingredients can be employed in the process of the invention. These dairy protein ingredients may be obtained from non-fat dry milk (NFDM), whey powders or concentrates, casein, and milk protein powders or concentrates, and combinations thereof. Casein is the predominant protein in milk. In general, whey makes up about 20 percent and casein makes up about 80 percent of the protein content of milk. The term "dairy protein" refers to natural undenatured (i.e., micellar) dairy protein forms, and not hydrolyzed derivatives and forms of dairy protein such as those formed in natural cheese making or by certain chemical treatments of micellar protein. For instance, micellar casein is desirable instead of denatured/hydrolyzed caseins such as caseinates, rennet caseins or acid caseins, as the latter type are more apt to impart off-flavors in the finished cheese. Some high casein concentration formulations may give an off-flavor, and thus a whey source may be blended with a casein source to reduce that possibility, if desired, as a dairy mix ingredient.

Preferred dairy protein ingredients include whey protein concentrate, whey protein isolate, dried whey, nonfat dry milk, milk protein concentrate, milk protein isolate, or a combination thereof. Preferred dairy protein ingredients are commercially available as milk protein concentrate under tradenames ALAPRO 4850 (MPC85), ALAPRO 4700 (MPC70), ALAPRO 4560 (MPC56), ALAPRO 4420 (MPC42), and ALAPRO 4424 from New Zealand Milk Products, Inc. (New Zealand), and MPC80, and MPC42 from Murray Goulburn (Australia); mixtures can also be used if desired. These dairy ingredients may be prepared by conventional procedures known by those of skill in the art. These commercially available dairy ingredients are generally characterized by their milk protein content; for example, MPC70 contains about 70 percent crude protein. Generally, commercial milk protein powders contain about 1 percent fat.

The dairy protein ingredients employed in the process of the invention generally range from about 15 to about 30 percent of the total weight of the soy-containing processed cheese product, and preferably range from about 20 to about 28 percent.

A wide variety of milkfats can be employed in the process of the invention. These milk fats include cream, dried sweet cream, anhydrous milk fat, concentrated milk fat, and mixtures thereof. Such milk fats are commercially available from sources known by those of skill in the art, such as, for example, Kraft Foods, Inc. (Northfield, III.), Land O'Lakes (Tulare, Calif.), Dairy Gold (Kilmallock, Ireland), New Zealand Milk Products, Inc. (Victoria, Australia), and Dairy Farmers of America (Dairy Farmer Coop.-telephone number (888) 385-4711).

The milk fat employed in the process of the invention generally ranges from about 0.5 to about 5 percent of the total weight of the cheese product or process cheese base being produced, and preferably ranges from about 1 to about 3 percent. Milk fat is used as a supplemental source of milk fat used in combination with natural cheese in several embodiments of the present invention. Depending on the fat content of the natural cheese, the amount of milk fat can be adjusted accordingly to provide the desired product fat content.

Natural cheeses suitable to practice the present invention include any conventionally produced natural cheese except soft cheeses, (i.e., cottage cheese, cream cheese, and Neuchatel cheese). Especially preferred cheeses for use in the current invention include cheddar cheese, Colby cheese, Swiss cheese, brick cheese, Muenster cheese, pasta filata cheese, washed curd, and granular curd cheese. The natural cheese may be made with whole, low fat or skim milk. When low fat or milks have been used and the natural cheese has a lower fat content, then it may be necessary to proportionally increase the amount of milk fat introduced via a separate ingredient source into the mixture to be cooked to provide a desired fat content in the soy cheese product. For purposes herein, a "natural cheese" refers to cheese made without emulsifying agents. For instance, natural cheeses include those traditionally made by developing acidity in milk and setting the milk with a clotting agent, such as rennet, or by developing acidity to the isoelectric point of the protein; the set milk is cut and whey is separated from the block; and the curd may be pressed to provide a cheese block and then cured. The base curd and/or cured curd may be used as "natural cheese."

When used, the natural cheese is added in an amount generally ranging from about 0 to about 40 percent of the total weight of the cheese product or process cheese base being produced, and preferably ranges from about 11 to about 35 percent. As the fat content of natural cheese may vary depending on the type of natural cheese and production method, the relative addition rates of the natural cheese and separate milk fat ingredient can be adjusted accordingly to provide the desired product fat content.

The emulsifying agents employed in the manufacture of processed cheeses are generally one or mixtures of two or more of the following:
monosodium phosphate, disodium phosphate, dipotassium phosphate, trisodium phosphate, tricalcium phosphate, sodium metaphosphate, sodium hexametaphosphate, sodium acid pyrophosphate, tetrasodium pyrophosphate, sodium aluminum phosphate, sodium citrate, potassium citrate, calcium citrate, sodium tartrate, and sodium potassium tartrate. The emulsifying salts are added in an amount generally ranging from about 0.5 to about 5 percent of the total weight of the cheese product or process cheese base being produced, and preferably ranges from about 0.7 to about 4.2 percent.

Any edible acid may be used in the process of the invention, such as lactic acid, sorbic acid, acetic acid, citric acid, and the like. Salt may be optionally added in amounts, such as about 0.8 to about 2 percent of the total weight of the cheese product.

It is contemplated that a wide variety of other edible natural or artificial flavors and ingredients may, optionally, be employed in the process of the invention. Such ingredients include any edible substance which, either alone, or in combination with other ingredients, imparts a desirable taste, color, and/or other benefit to the cheese product or process cheese base being manufactured. The amount and type of these ingredients that may be employed in the process of the invention depend upon the desired color and flavor of the final cheese product or process cheese base being produced. Suitable flavors for mixing into the heated cheese include, for example, cheddar cheese flavor. The flavor may be added in dry form or as an aqueous solution. Known or suitable food grade colorants may be added to adjust the appearance of the cheese product in amounts which do not adversely impact the functionality, texture, or taste of the product.

The following examples are included to illustrate the invention and not to limit it. Unless otherwise stated, all percentages are by weight.

**Example 1.** Soy cheese slices were prepared in the following manner. The cheese formulation included soy protein from soy protein isolate in powdered form, and dairy protein and fat from commercial dairy-based process cheese products. In particular, slices of commercial Kraft American Cheese Singles and Kraft 2% Milk Cheese Singles were unwrapped and ground in a cheese blender (Model DRB-1 Eirich Cheese Blender) at speed 5 for 10 minutes. The (a) emulsifying salts, (b) water, and (c) soy protein isolate powder, were added to the blender, in that sequence, and the resulting mixture was blended at speed 5 for 15 minutes at 72°F to provide a cheese mix. The cheese mix was formulated to contain a relatively high solids/low moisture content. The ingredient proportions and blending conditions were selected such that the resulting mixture was a highly viscous yet flowable semi-solid mass, and not an aqueous emulsion; no emulsion was, or should be, formed. The cheese mix had the formulation described in Table 1.

**Table 1: Soy Cheese Formulation**

| **Ingredient** | **Amount, %** |
|---|---|
| Kraft American Cheese Singles | 50.0 |
| Kraft 2% Milk Cheese Singles | 20.1 |
| Soy Protein Isolate¹ | 10.4 |
| Water | 8.9 |
| Emulsifying Salts² | 0.7 |
| Condensate³ | 9.9 |
| **Total** | 100.0 |

| | |
|---|---|
| 1. Pro Fam 781 soy protein isolate from ADM (Decatur, Illinois). | |
| 2. Disodium phosphate and tricalcium phosphate. | |
| 3. Additional water derived from steam introduced in the cooker. | |

The blended cheese mix was transferred to a 40 lb. cooker, steam was injected, and the cheese mix was cooked at 176°F for 5 minutes, providing a homogenous cheese mass. The resulting cheese mass was hot packed in slice form on a cheese slice machine.

The cheese slices were stored at about 39°F for 24 hours, then were unwrapped and organoleptically compared to several commercial soy-free process cheese slices. The texture and flavor of the soy cheese product slices were comparable to that of Kraft American cheese singles and Kraft 2% Milk cheese singles. The soy cheese product had a softening point of 126°F. Typically, the softening point range for conventional process cheese is about 122 to about 140°F. The softening point is a measure of the product's ability to melt upon heating. The soy cheese product had the nutritional content described in Table 2.

**Table 2: Soy Cheese Product Nutritional Content**

| **Component** | **Amount, %** |
|---|---|
| Protein | 24.0 |
| Carbohydrate | 4.6 |
| Fat | 15.8 |
| Moisture | 49.3 |
| Other | 6.3 |
| **Total** | 100.0 |

**Example 2.** Soy process cheese slices were prepared with a process cheese formulation including soy protein sourced from soy protein isolate in powdered form, and dairy protein and fat sourced from natural cheese and isolated dairy components. A natural cheese blend was ground in the same cheese blender described in Example 1 at speed 5 for 10 minutes. Then, (a) emulsifying salts, (b) dairy mix, (c) milk fat and coloring agent, (d) water, (e) sorbic acid, and (f) soy protein isolate powder, were added to the blender, in that sequence, and the resulting mixture was blended at speed 5 for 15 minutes at 72°F to provide a cheese mix; again, no emulsion was, or should be, formed. The dairy mix comprised dairy proteins as a combination of milk protein concentrate and whey (approximately 60:40 mixture). The cheese mix was formulated to contain a relatively high solids/low moisture content. The ingredient proportions and blending conditions were selected such that the resulting mixture was a highly viscous yet flowable semi-solid mass, and not an aqueous emulsion. The overall cheese formulation contained nutrients in proportions similar to that of Kraft American cheese singles. The soy protein isolate and emulsifying salts used were the same respective types as described in Example 1. The cheese mix had the formulation described in Table 3.

**Table 3: Soy Cheese Formulation**

| **Ingredient** | **Amount, %** |
|---|---|
| Natural Cheese Blend⁴ | 34.3 |
| Dairy Mix⁵ | 13.9 |
| Soy Protein Isolate | 10.4 |
| Water | 35.8 |
| Anhydrous Milk Fat | 1.2 |
| Emulsifying Salts | 4.2 |
| Sorbic Acid | 0.1 |
| Colorant⁶ | <0.1 |
| **Total** | 100.0 |

| | |
|---|---|
| ^{4.} Mild cheddar cheese (24.8%) and sharp cheddar cheese (9.5%). | |
| ^{5.} WPC-34 (1.7%), NFDM (0.3%), dried whey (3.0%), MPC (0.8%), solid dairy mix (4.3%), and Kraft American Singles (3.8%). | |
| ^{6.} Annatto 6 (0.01%) and APO carotenal (0.01%). | |

The blended cheese mix was transferred to a 40 lb. cooker, and cooked at 176°F for 5 minutes (without steam injection), providing a homogenous cheese mass. The resulting cheese mass was hot packed in slice form on a cheese slice machine.

The cheese slices were stored at about 39°F for 24 hours, then were unwrapped and organoleptically compared to several commercial soy-free process cheese slices. The texture and flavor of the soy cheese product slices were comparable to that of Kraft American cheese singles and Kraft 2% Milk cheese singles. The soy cheese product had a softening point (i.e., a measure of the product's ability to melt upon heating) of 112°F. The soy cheese product had the nutritional content described in Table 4.

**Table 4: Soy Cheese Product Nutritional Content**

| **Component** | **Amount (%)** |
|---|---|
| Protein | 24.3 |
| Carbohydrate | 4.9 |
| Fat | 14.2 |
| Moisture | 50.6 |
| Other | 6.0 |
| **Total** | 100.0 |

**Example 3.** Soy process cheese slices were prepared according to a modified version of the method described in Example 2. In this variation, the water was separately mixed with the dairy mix in a high shear mixer, instead of being added at the cheese blender, and the combination was homogenized by processing it for 2 minutes at 72°F at medium speed setting in a commercial homogenizer (Tekmar Homogenizer) to provide a wet mix comprising the dairy mix and water. The wet mix, natural cheese, milk fat, color, isolated soy protein, emulsifying salts, and acid were then introduced to the cheese blender of Example 1 and blended at speed 5 for 15 minutes at 72°F. The types of ingredients used were the same as those described in Example 2. Again, the ingredient proportions and blending conditions were selected such that the resulting mixture was a highly viscous yet flowable semi-solid mass, and not an aqueous emulsion. The overall cheese mix had a similar overall formulation as that described in Table 3. The blended cheese mix was introduced into a cooker and cooked at 176°F for 5 minutes (without steam injection), providing a homogenous cheese mass. The resulting cheese mass was hot packed in slice form on a cheese slice machine.

The cheese slices were stored at about 39°F for 24 hours, then were unwrapped and organoleptically compared to several commercial soy-free process cheese slices. The texture and flavor of the soy cheese product slices were comparable to that of Kraft American cheese singles and Kraft 2% Milk cheese singles.

**Example 4.** A series of soy cheese samples were prepared with different types of soy protein sources and different soy protein molecular weights to evaluate the effects of those parameters on the organoleptic properties of the product. The various soy protein sources examined included (a) different hydrolyzed soy protein isolate powders having different molecular weight distributions, (b) a defatted (non-hydrolyzed) soy flour, (c) and a soymilk powder.

The molecular weight distribution of the soy protein in each soy protein source tested was determined by Polyacrylamide Gel Electrophoresis (PAGE) against molecular weight standard (using the proteins that have known molecular weights).

The method and cheese formulation of Example 2 was used to prepare soy cheese using each type of soy protein source. In the instances of samples prepared with soymilk or soy flour, they were used in an equivalent amount in lieu of the soy protein isolate.

The soy protein sources, molecular weights, and organoleptic results of the cheese samples prepared are described in Table 5.

**Table 5: Effect of Type and MW of Soy Protein Source in Soy Cheeses**

| **Sample** | **Soy Protein** | **Molecular Weight (Daltons)** | **Organoleptic Results** |
|---|---|---|---|
| 1 | soy protein isolate⁷ | 6,000 - 29,000 | good texture and flavor comparable to soy-free process cheese |
| 2 | soy protein isolate | 6,000 - 29,000 | good texture and flavor comparable to soy-free process cheese |
| 3 | soy protein isolate⁹ | 14,000 - 70,000 | too viscous for hot pack, too firm & gritty, soy off-flavor |
| 4 | soy protein hydrolysate¹⁰ | 14 000 - 70 000 | too viscous for hot pack, too firm & gritty, dark color, soy off-flavor |
| 5 | soy protein concentrate¹¹ | 14,000 - 70 000 | too viscous for hot pack, too firm & gritty, soy off-flavor |
| 6 | soy protein hydrolysate ¹² | 4,000 - 14,000 | too soft and watery, caramel & fermented off-flavors |
| 7 | non hydrolyzed defatted soy flour¹³ | 14,000 - 70,000 | too viscous for hot pack, too firm & gritty, soy off-flavor |
| 8 | soymilk powder¹⁴ | 14,000 - 70,000 | too viscous for hot pack, too firm & gritty, slight soy flour-like off-flavor |

| | | | |
|---|---|---|---|
| ^{7.} XT40 from Solae Company. | | | |
| ^{8.} PROFAM 781 from Archer-Daniel-Midland Co. | | | |
| ^{9.} ARDEX F from Archer-Daniel-Midland Co. | | | |
| ^{10.} SPH from Cargill, Inc. | | | |
| ^{11.} ALPHA 5800 from Solae Company. | | | |
| ^{12.} VW 600K from Quest. | | | |
| ^{13.} Defatted soy flour from Central Soya (Fort Wayne, 1N). | | | |
| ^{14.} Spray-dried soymilk powder from Sunrich. | | | |

The cheese samples 1 and 2, made with soy protein hydrolysate (partially hydrolyzed) soy protein isolate having a molecular weight distribution of 6,000 to 29,000 had a texture, flavor, and appearance (color) comparable to soy-free process cheese, i.e., Kraft American cheese singles. The soy protein isolates used in cheese samples 1 and 2 hydrated readily prior to process cheese preparation and the cheese emulsions made with these soy protein preparations were processed readily in a hot-pack machine to make single slices that had desirable texture, flavor and color. The other samples using soy proteins havin greater or smaller molecular weight ranges did not provide a satisfactory product. Samples 3-5 made with large molecular weight soy protein isolates and sample 8 made with a large molecular weight spray-dried soymilk powder could not be hydrated readily and provided a process cheese having gritty, lumpy texture and had an off-flavor. Further, cheese emulsions made with the soy protein isolates of samples 3-5 solidified too quickly, were difficult to be pumped through the hot-pack machine, had a gritty texture, and caused the hot-pack machine to jam at times. Sample 6 made with the low molecular weight soy protein isolate was too soluble, did not have enough gelling property, generated a soft, mushy process cheese product with undesirable texture. Sample 7 made with nonhydrolyzed soy flour provided a process cheese having a gritty, lumpy texture and had off-flavor.

These results show that the right molecular weight size range, solubility, gelling property, and minimal soy flavor in soy protein in a process cheese formulation are important for preparation of savory soy cheese slices.

**Example 5.** Soy Velveeta® -type light loaves were prepared in the following manner. The cheese formulation included soy protein sourced from soy protein isolate in powdered form, and dairy protein and fat sourced from commercial dairy-based process cheese products. In particular, loaves of commercial Kraft Velveeta® and Kraft Velveeta® Light were unwrapped and ground in a Hobart blender (Model A-200T) at speed 2 for 5 minutes. The ingredients (a) emulsifying salts, (b) water, and (c) soy protein isolate powder were added to the blender, in that sequence, and the resulting mixture was blended at speed 5 for 15 minutes at 72°F to provide a cheese mix. The cheese mix was formulated to contain a relatively high solids/low moisture content. The ingredient proportions and blending conditions were selected such that the resulting mixture was a highly viscous yet flowable semi-solid mass, and not an aqueous soy emulsion. The cheese mix had the formulation described in Table 6.

**Table 6: Soy Velveeta® -Type Loaf Light Formulation**

| **Ingredient** | **Amount, %** |
|---|---|
| Kraft Velveeta® Loaf | 50.0 |
| Kraft Velveeta® Light | 20.1 |
| Soy Protein Isolate¹⁵ | 10.6 |
| Water | 7.63 |
| Emulsifying Salts¹⁶ | 0.7 |
| Condensate¹⁷ | 10.97 |
| **Total** | 100.0 |

| | |
|---|---|
| ^{15.} ADM's Profam 781, Cargill's Prolisse 500, Solae's XT40, and Quest's, VW 600K. | |
| ^{16.} Disodium phosphate. | |
| ^{17.} Additional water derived from steam introduced in the cooker. | |

The blended cheese mix was transferred to a 5 lb. cooker, steam was injected, and the cheese mix was cooked at 176°F for 5 minutes, providing a homogenous cheese mass. The resulting cheese mass was hot packed in 3"x8.5"x3" cartons with heat-resistant linings.

The cheese loaves were stored at about 39°F for 24 hours, then were unwrapped and organoleptically compared to several commercial soy-free process cheese loaves. The texture and flavor of the soy cheese product loaves were comparable to that of Kraft American Velveeta® and Kraft Velveeta® Light Loaves. The soy cheese product had a softening point of 125°F. The soy cheese product had the nutritional content described in Table 7:

**Table 7: Soy Velveeta® -Type Loaf Light Nutritional Content**

| **Component** | **Amount, %** |
|---|---|
| Protein | 22 |
| Carbohydrate | 8.23 |
| Fat | 14 |
| Moisture | 53.6 |
| Other | 2.17 |
| **Total** | 100.0 |

**Example 6.** Soy Velveeta® -Type Light Loaves were prepared with a process cheese formulation including soy protein sourced from soy protein isolate in powdered form, and dairy protein and fat sourced from natural cheese and isolated dairy components. A natural cheese blend was ground in a Hobart blender (Model A-200T) at speed 2 for 5 minutes. The ingredients (a) emulsifying salts, (b) a dairy mix, (c) milk fat and coloring agent, (d) water, (e) stabilizers, (f) sorbic acid, and (g) soy protein isolate powder were added to the blender, in that sequence, and the resulting mixture was blended at speed 5 for 15 minutes at 72°F to provide a cheese mix. The dairy mix comprised dairy proteins as a combination of milk protein concentrate and whey (approximately an 60:40mixture). The cheese mix was formulated to contain a relatively high solids/low moisture content. The ingredient proportions and blending conditions were selected such that the resulting mixture was a highly viscous yet flowable semi-solid mass, and not an aqueous soy emulsion. The overall cheese formulation contained nutrients in proportions similar to that of Kraft Velveeta® Light Loaves. The soy protein isolate and emulsifying salts used were the same respective types as described in Example 5. The cheese mix had the formulation described in Table 8.

**Table 8: Soy Velveeta® -Type Light Loaf Formulation**

| **Ingredient** | **Amount, %** |
|---|---|
| Natural Cheese¹⁸ | 29.6 |
| Dairy Mix¹⁹ | 13.9 |
| Soy Protein Isolate | 10.6 |
| Water | 39.3 |
| Milk Fat²⁰ | 2.4 |
| Stabilizers²¹ | 0.74 |
| Emulsifying Salts²² | 3.4 |
| Acidulants²³ | 0.04 |
| Colorant²⁴ | <0.1 |
| **Total** | 100.0 |

| | |
|---|---|
| ^{18.} Mild cheddar cheese (20.4%) and sharp cheddar cheese (9.2%). | |
| ^{19.} 4.4% MPC70, 1.6% CB-1 (Creamy Butter-1 flavor), 0.14% EMFCII (Enzyme Modified Fresh Cheese II), 4.76% krafen dried whey, and 2.78% WPC34. | |
| ^{20.} Anhydrous milk fat. | |
| ^{21.} 0.4% Mltodextrein, 0.32% Frodex corn syrup solids, and 0.02% sodium alginate. | |
| ^{22.} 2.59% Disodium phosphate, 0.17% monosodium phosphate, and 0.64% salt. | |
| ^{23.} 0.04% Sorbic acid and 0.23% lactic acid. | |
| ^{24.} 0.02% Carotenal #2 and 0.02% Annatto 6. | |

The blended cheese mix was transferred to a 5 lb. cooker, and cooked at 176°F for 5 minutes (without steam injection), providing a homogenous cheese mass. The resulting cheese mass was hot packed in 3"x8.5"x3" cartons with heat-resistant linings.

The cheese slices were stored at about 39°F for 24 hours, then were unwrapped and organoleptically compared to several commercial soy-free process cheese loaves. The texture and flavor of the soy cheese product slices were comparable to that of Kraft Velveeta® and Kraft Velveeta® Light Loaves. The soy cheese product had a softening point of 128°F. The soy cheese product had the nutritional content described in Table 9.

**Table 9: Soy Velveeta® -Type Loaf Light Nutritional Content**

| **Component** | **Amount (%)** |
|---|---|
| Protein | 22.4 |
| Carbohydrate | 6.8 |
| Fat | 13.5 |
| Moisture | 52.7 |
| Other | 4.6 |
| **Total** | 100.0 |

**Example 7.** Soy Cheez Whiz® -type product was prepared in the following manner. The cheese formulation included soy protein sourced from soy protein isolate in powdered form, and dairy protein and fat sourced from commercial dairy-based process cheese products. In particular, commercial Kraft Cheez Whiz® and Kraft Cheez Whiz® Light were emptied from the jar and blended in a Hobart blender (Model A-200T) at speed 2 for 5 minutes. The ingredients (a) emulsifying salts, (b) water, and (c) soy protein isolate powder were added to the blender, in that sequence, and the resulting mixture was blended at speed 2 for 15 minutes at 72°F to provide a cheese mix. The cheese mix was formulated to contain a relatively high solids/low moisture content. The ingredient proportions and blending conditions were selected such that the resulting mixture was a highly viscous yet flowable semi-solid mass, and not an aqueous soy emulsion. The cheese mix had the formulation described in Table 10.

**Table 10: Soy Cheez Whiz® -Type Light Formulation**

| **Ingredient** | **Amount, %** |
|---|---|
| Kraft Cheez Whiz® | 50.0 |
| Kraft Cheez Whiz® Light | 20.1 |
| Soy Protein Isolate²⁵ | 10.6 |
| Water | 10.6 |
| Emulsifying Salts²⁶ | 0.7 |
| Condensate²⁷ | 8.0 |
| **Total** | 100.0 |

| | |
|---|---|
| ^{25.} ADM's Profam 781, Cargill's Prolisse 500, Solae's XT 40, or Quesfs VW 600K. | |
| ^{26.} Disodium phosphate. | |
| ^{27.} Additional water derived from steam introduced in the cooker. | |

The blended cheese mix was transferred to a 5 lb. cooker, steam was injected, and the cheese mix was cooked at 176°F for 5 minutes, providing a homogenous cheese mass. The resulting cheese mass was hot packed by pouring it into wide-mouth 15-ounce jars.

The soy Cheez Whiz® -type product was stored at about 39°F for 24 hours, then was dispensed and organoleptically compared to several commercial soy-free process cheese spread. The texture and flavor of the soy Cheez Whiz® -type product were comparable to that of Kraft Cheez Whiz® and Kraft Cheez Whiz® Light. The soy cheese product had the nutritional content described in Table 11.

**Table 11: Soy Cheez Whiz® -Type Light Nutritional Content**

| **Component** | **Amount, %** |
|---|---|
| Protein | 14.3 |
| Carbohydrate | 7.4 |
| Fat | 13.9 |
| Moisture | 59.6 |
| Other | 4.8 |
| **Total** | 100.0 |

**Example 8.** Soy Cheez Whiz® -Type Light was prepared with a process cheese formulation including soy protein sourced from soy protein isolate in powdered form, and dairy protein and fat sourced from natural cheese and isolated dairy components. A natural cheese blend was ground in a cheese a Hobart blender (Model A-200T) at speed 2 for 5 minutes. The ingredients (a) emulsifying salts, (b) a dairy mix, (c) fat blend and coloring agent, (d) water, (e) stabilizers, (f) acidulants , and (g) soy protein isolate powder, were added to the blender, in that sequence, and the resulting mixture was blended at speed 3 for 15 minutes at 72°F to provide a cheese mix. The dairy mix comprised dairy proteins as a combination of milk protein concentrate and whey (approximately an 60:40 mixture). The cheese mix was formulated to contain a relatively high solids/low moisture content. The ingredient proportions and blending conditions were selected such that the resulting mixture was a highly viscous yet flowable semi-solid mass, and not an aqueous soy emulsion. The overall cheese formulation contained nutrients in proportions similar to that of Kraft Cheez Whiz® . The soy protein isolate and emulsifying salts used were the same respective types as described in Example 7. The cheese mix had the formulation described in Table 12.

**Table 12: Soy Cheez Whiz® -Type Light Formulation**

| **Ingredient** | **Amount, %** |
|---|---|
| Natural Cheese Blend²⁸ | 11.0 |
| Dairy Mix²⁹ | 13.6 |
| Soy Protein Isolate | 10.6 |
| Water | 47.8 |
| Fat Blend³⁰ | 9.16 |
| Stabilizers³¹ | 3.51 |
| Emulsifying Salts³² | 3.68 |
| Acidulants³³ | 0.66 |
| Colorant³⁴ | <0.1 |
| Flavor³⁵ | 0.02 |
| **Total** | 100.0 |

| | |
|---|---|
| ^{28.} 7.21 °/a Mild cheddar cheese and 3.75% sharp cheddar cheese. | |
| ^{29.} 4.83% Krafen dried whey, 4.35°/a MPC 70 and 4.37°/a WPC 34. | |
| ^{30.} 0.01 %a Anhydrous milk fat and 9.16% canola oil. | |
| ^{31.} 2.64% Maltodextrin, 0.19% Worecestershire sauce, 0.4% sodium alginate, and 0.28% mustard flour. | |
| ^{32.} 2.87% Disodium phosphate and 0.81% salt. | |
| ^{33.} 0.13% Sorbic acid and 0.53% lactic acid. | |
| ^{34.} 0.01 % Oleoresin paprika, and 0.03% Annatto 6. | |
| ^{35.} 0.02% LNDT-1 (Liquid Natural Dairy Type 1). | |

The blended cheese mix was transferred to a 5 lb. cooker, and cooked at 176°F for 5 minutes (without steam injection), providing a homogenous cheese mass. The resulting cheese mass was hot packed by pouring it into 12-ounce wide-mouth jars.

The soy Cheez Whiz® -type product was stored at about 39°F for 24 hours, then was dispensed and organoleptically compared to several commercial soy-free process cheese spread. The texture and flavor of the soy Cheez Whiz® -type product were comparable to that of Kraft Cheez Whiz® and Kraft Cheez Whiz® Light. The soy Cheez Whiz® -type product had the nutritional content described in Table 13.

**Table 13: Soy Cheez Whiz® -Type Light Nutritional Content**

| **Component** | **Amount (%)** |
|---|---|
| Protein | 17.2 |
| Carbohydrate | 9.4 |
| Fat | 12.5 |
| Moisture | 55.3 |
| Other | 5.6 |
| **Total** | 100.0 |

## Claims

1. A method for preparing a soy protein-containing cheese, said method comprising:
(1) blending a hydrolyzed soy protein particulate ingredient containing soy protein having a molecular weight of about 4,000 to about 40,000 Daltons, dairy protein, dairy fat, emulsifying salt, and water in amounts sufficient to form a non-emulsified mixture; and
(2) cooking the non-emulsified mixture at a temperature and for a time sufficient to produce the soy protein-containing cheese,
wherein the soy protein-containing cheese has at least about 5 percent soy protein.

2. The method of claim 1, wherein the molecular weight of soy protein is about 5,000 to about 35,000 Daltons.

3. The method of claim 1, wherein the molecular weight of soy protein is about 5,500 to about 30,000 Daltons.

4. The method of any one of Claims 1 to 3, wherein the hydrolyzed soy protein particulate ingredient has soy protein content greater than about 70 percent.

5. The method of any one of Claims 1 to 3, wherein the hydolyzed soy protein particulate ingredient has a soy protein content greater than about 80 percent.

6. The method of any one of Claims 1 to 3, wherein the hydrolyzed soy protein particulate ingredient has a soy content greater than 90 percent.

7. The method of any one of Claims 1 to 6, wherein the hydrolyzed soy protein particulate ingredient comprises soy protein insolate.

8. The method of any one of Claims 1 to 7, wherein the dairy protein and the dairy fat are provided in the form of a substantially soy-free process cheese.

9. The method of any one of Claims 1 to 7, wherein the fat comprises natural cheese and the dairy protein comprises whey protein concentrate, whey protein isolate, dried whey, nonfat dry milk, milk protein concentrate, milk protein isolate, or a combination thereof.

10. The method of any one of Claims 1 to 9, wherein the blending step comprises mixing for about 10 to about 20 minutes at about 66 to about 78°F and at mixing speed such that the non-emulsified mixture is substantially homogenous; and wherein the cooking step comprises heating the non-emulsified mixture for about 3 to about 15 minutes at about 170 to about 180°F.

11. The method of any one of Claims 1 to 10, further comprising hot-packing the soy protein-containing cheese in a form selected from a slice, sheet, loaf, or spread.

12. A method of any one of Claims 1 to 11 additionally comprising a pre-step of mixing a dairy protein source and water with high shear to provide a homogenized aqueous mixture.

13. A method for preparing a soy protein-containing cheese, said method comprising:
(1) blending a hydrolyzed soy protein particulate ingredient containing soy protein having a molecular weight of about 4,000 to about 40,000 Daltons, dairy protein, dairy fat, emulsifying salt, and water to provide a non-emulsified mixture; and
(2) cooking the non-emulsified mixture at a temperature and for a time sufficient to produce a soy protein-containing cheese,
wherein a water activity of less than 0.8 is maintained during the method and wherein the soy protein-containing cheese contains at least about 5 percent soy protein.

14. The method of claim 13, wherein the water activity is maintained at less than 0.6 during the method.

15. The method of claim 13, wherein the water activity is maintained at less than 0.5 during the method.

16. A soy protein-containing cheese prepared by the method of any one of Claims 1 to 15.

17. The soy protein-containing cheese of claim 16, wherein the soy protein-containing cheese contains about 22 to about 26 percent total protein, about 4 to about 6 percent carbohydrates, about 13 to about 17 percent fat, and about 48 to about 60 percent moisture.

18. The soy protein-containing cheese of Claim 16 or 17, wherein the soy protein-containing cheese is in a form selected from a slice, sheet, loaf, or spread.
